# EUROPEAN PATENT APPLICATION

(11) **EP 1 973 048 A1**
(43) Date of publication of application: **24.09.2008**
(21) Application number: 08153004.0
(22) Date of filing: 19.03.2008
(51) Int. Cl.: G06F 17/30

(54) **Document displaying apparatus, document displaying method, and computer program product**

(30) Priority: 19.03.2007 JP 2007071511
(71) Applicant: Ricoh Company, Ltd., Tokyo 143-8555 (JP)
(72) Inventor: Umehara, Naoki, Ohta-ku, Tokyo 143-8555 (JP)
(74) Representative: Schwabe - Sandmair - Marx

(57) **Abstract**

A document displaying apparatus includes a selecting unit that accepts selection of a certain document file, a metadata processing unit (14) that obtains from an external device metadata of a relevant document file relevant to the document file based on document information of the selected document file, and a display controlling unit (16) that displays the obtained metadata on a displaying unit.

## Description

### CROSS-REFERENCE TO RELATED APPLICATIONS

The present application claims priority to and incorporates by reference the entire contents of Japanese priority document 2007-071511 filed in Japan on March 19, 2007.

### BACKGROUND OF THE INVENTION

### 1. Field of the Invention

The present invention relates to a document displaying apparatus, a document displaying method, and a computer program product to display a document file.

### 2. Description of the Related Art

Various application programs for processing data (hereinafter, "document processing application") are used for various purposes in various fields. In the field of printing, for example, generally a driver software installed in a client terminal is used as a document processing application. Specifically, the driver software performs processes such as development of a document file, or requesting a printer to print a document file.

Although the original purpose of document processing applications used in the field of printing was limited to printing a document, in recent years the purpose has been diversified. For example, by providing a server with a function as driver software, it has become possible to provide services such as driverless printing, printing a spooled file, or printing from a web browser. Related technology has been disclosed in, for example, Japanese Patent Application Laid-Open No. 2001-243699, Japanese Patent Application Laid-Open No. 2006-209410, and Japanese Patent Application Laid-Open No. 2006-155087.

A technology is proposed wherein, even upon receiving a print request for a plurality of printing objects, each separate printing operation is performed for each printing object. A related technology has been disclosed in, for example, Japanese Patent Laid-Open No. 2006-085577.

In the technologies described in Japanese Patent Application Laid-Open No. 2001-243699, Japanese Patent Application Laid-Open No. 2006-209410, and Japanese Patent Application Laid-Open No. 2006-155087, however, a user must search printing log or a document file, which is to be printed, in a document server. Such a search is time consuming and troublesome. Even when the document is finally found, document files relevant thereto cannot be searched for at the same time with the document, with the result that each document file has to be examined whether it is relevant to the document file.

It is problematic that even if the document files relevant to a certain document file are found, all these document files cannot be printed together at the same time. For example, with regards to a document file such as a web page, when a set of documents are separately stored in different uniform resource locators (URLs), only Web pages stored in a certain URL can be printed together. It should be noted that in the technology described in Japanese Patent Laid-Open No. 2006-085577, it is possible to handle a plurality of printing objects, however, a user must search for a relevant document file and set the relevant document file as a printing object, which job is cumbersome and impractical.

### SUMMARY OF THE INVENTION

It is an object of the present invention to at least partially solve the problems in the conventional technology.

According to an aspect of the present invention, there is provided a document displaying apparatus that includes a receiving unit that receives specification of a document file; a metadata processing unit that obtains from an external device metadata of a relevant document file that is a file relevant to the document file based on document information of the document file; and a display controlling unit that displays the metadata on a displaying unit.

According to another aspect of the present invention, there is provided a document displaying method that includes obtaining from an external device metadata of a relevant document file that is a file relevant to the document file based on document information of a specified document file; and displaying the metadata on a displaying unit.

According to still another aspect of the present invention, there is provided a computer program product that includes a computer usable medium having computer readable program codes embodied in the medium that, when executed, causes a computer to execute the above method.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 is a schematic diagram for explaining a document displaying apparatus according to a first embodiment of the present invention;
Fig. 2 is an example of contents of rule data according to the first embodiment;
Fig. 3 is an example of contents of metadata according to the first embodiment;
Fig. 4 is an example of a display screen according to the first embodiment;
Fig. 5 is a flowchart of a relevant information displaying operation performed by the document displaying apparatus shown in Fig. 1;
Fig. 6 is a schematic diagram for explaining a document displaying apparatus according to a second embodiment of the present invention;
Fig. 7 is an example of rule data according to the second embodiment;
Fig. 8 is an example of a display screen according to the second embodiment;
Fig. 9 is a flowchart of a relevant information displaying operation performed by the document displaying apparatus shown in Fig. 6;
Fig. 10 is a schematic diagram for explaining a document displaying apparatus according to a third embodiment of the present invention;
Fig. 11 is an example of a display screen according to the third embodiment;
Fig. 12 is a flowchart of a document file related operation performed by the document displaying apparatus shown in Fig. 10;
Fig. 13 is a flowchart of a document file reading operation performed by the document displaying apparatus shown in Fig. 10; and
Fig. 14 is a block diagram of an exemplary hardware configuration of the document displaying apparatuses shown in Figs. 1, 6, and 10.

### DETAILED DESCRIPTION OF THE PREFERRED EMBODIMENTS

Exemplary embodiments of the present invention will be described in detail below.

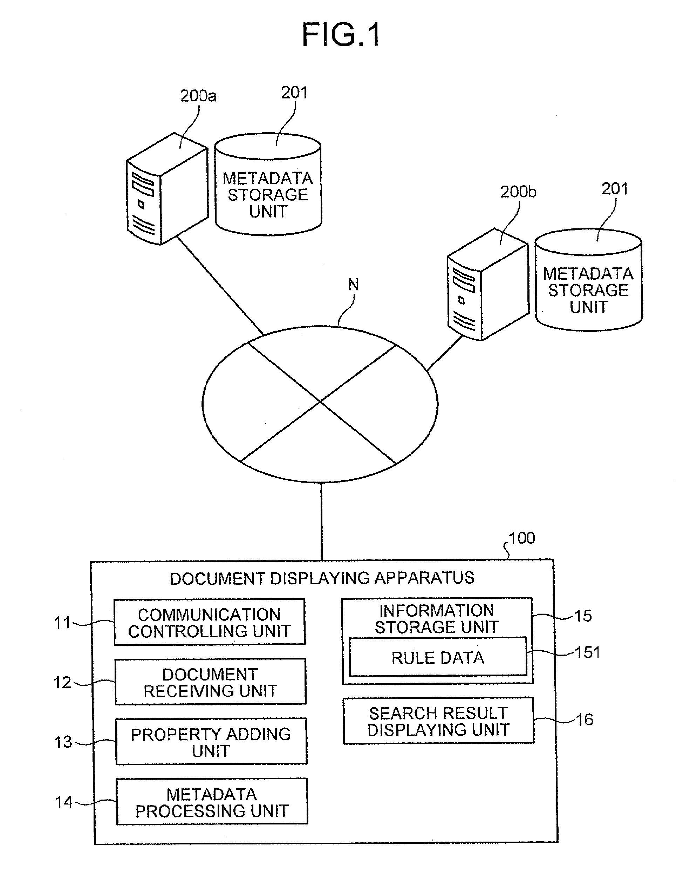

Fig. 1 is a schematic diagram for explaining a document displaying apparatus 100 according to a first embodiment of the present invention. The document displaying apparatus 100 is an information terminal device such as a personal computer (PC), a notebook PC, a personal digital assistant (PDA), and a mobile phone. The document displaying apparatus 100 has a configuration that makes it possible to access a server device (not shown), such as a Web server, that stores therein a document file via a network N. A document file means a concept that includes text data that is expressed by character codes and graphic data all or part of which is expressed by graphic or tabulated data.

The document displaying apparatus 100 includes a communication controlling unit 11, a document receiving unit 12, a property adding unit 13, a metadata processing unit 14, an information storage unit 15, and a search result displaying unit 16.

Various devices including metadata storage apparatuses 200a and 200b are connected to the document displaying apparatus 100 via the network N. The communication controlling unit 11 performs data transmission via the network N between the metadata storage apparatuses 200a and 200b.

The metadata storage apparatuses 200a and 200b are server devices that include a metadata storage unit 201 that stores therein metadata, and browsably provides metadata stored in the metadata storage unit 201 upon being accessed by the document displaying apparatus 100. The metadata storage apparatuses 200a and 200b are collectively called a metadata storage apparatus 200.

The document receiving unit 12 is a functional unit that receives a document file selected by a user as a printing object via an input apparatus 6, which will be described later. There is no limitation on what method is used for receiving a document. As an exemplary approach, the document receiving unit 12 can be embodied as a widget and displayed on a displaying apparatus 5, which will be described later, and a user can be directed to drag-and-drop a document file, or a printing object, into the widget. Alternatively, the document receiving unit 12 can be embodied as a bookmarklet, such as a Web browser, and a certain Web page (a document file) can be received via the bookmarklet. A document file received by the document receiving unit 12 is referred to as a search source document file.

The property adding unit 13 is a functional unit that adds a certain property to the search source document file. The property means a condition for narrowing down a document file (metadata) relevant to the search source document file.

More specifically, a user may specify, via the input apparatus 6, a tag element contained in metadata described later, as well as a character string used for characterizing a theme or a category of a document file, as a property added to a document file. When a user inputs, via the input apparatus 6, a certain character string as a property, the property adding unit 13 adds the character string as property information to the document file.

Thus, a property that is originally owned by the search source document file can be expanded by adding a new property to the search source document file. By expanding the property in this manner, search condition can be improved, with the result that metadata of a document file relevant to the search source document file can be obtained with more accuracy.

The metadata processing unit 14 is a functional unit that derives a search condition from document information of the search source document file and rule data 151 that is stored in the information storage unit 15, and searches metadata stored in the metadata storage unit 201 of the metadata storage apparatus 200 for metadata that satisfies the search condition.

Document information of a search source document file denotes various information with regards to the search source document file, such as a content thereof, a file type thereof, and a storing location thereof. When the search source document file is a structured document such as an XML formatted document, various structured elements (tag elements) contained therein may be used as document information.

When it is determined that property information is to be added to the search source document file, the metadata processing unit 14 derives a search condition based on the search source document file, the property information, and the rule data 151 stored in the information storage unit 15, and searches metadata stored in the metadata storage unit 201 of the metadata storage apparatus 200 for metadata that satisfies the search condition.

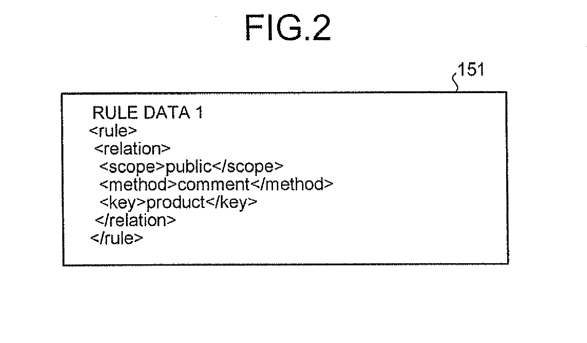

Operations performed by the metadata processing unit 14 will be described in detail below. First, referring to Fig. 2, the contents of the rule data 151 stored in the information storage unit 15 will be described.

Fig. 2 is an example of contents of the rule data 151. The rule data 151 is data that defines a rule for corresponding the search source document file to metadata on the network N (metadata stored in the metadata storage unit 201 of the metadata storage apparatus 200). As shown in Fig. 2, the rule data 151 is described by a structured document such as an XML formatted document.

In Fig. 2, the section between the tags "<relation>" and "</relation>" defines a rule regarding the relevance with the document files accepted in the document receiving unit 12, and a substantial rule is defined within the tags. The section "<scope>public</scope>" is an instruction to search metadata on the network N (the metadata storage unit 201). The sections "<method>comment</method>" and "<key>product</key>" are instructions to search for metadata that contains a "comment" on "product".

As described above, the rule data 151 shown in Fig. 2 is a rule for searching metadata on the network N for metadata containing a comment about the product. The metadata processing unit 14 derives a search condition, for example, for searching the network N for a document file that contains a "comment" on "product" as well as that refers to the product A, based on the rule data 151, a certain character string contained in any one of the search source document file and the property information or both, a character string that characterizes a title or a category thereof, and information about the storing location thereof. The rule data 151 is predetermined, however, the contents thereof is not limited to the example shown in Fig. 2.

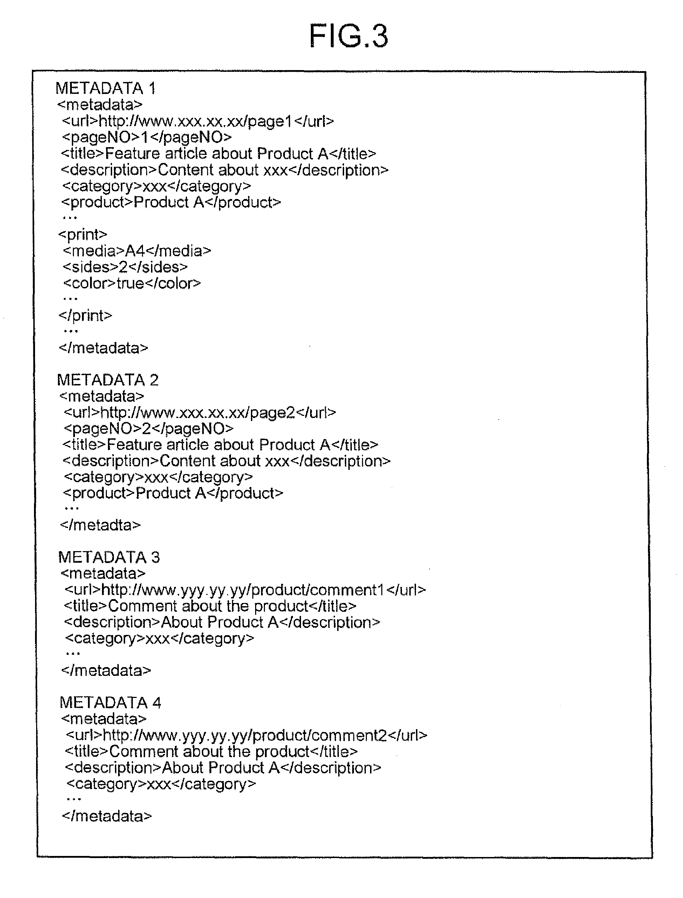

Next, referring to Fig. 3, metadata stored in the metadata storage unit 201 of the metadata storage apparatus 200 will be described. Metadata means meta information that describes information about a document file. Metadata stored in the metadata storage unit 201 is generated in advance, by a metadata generating unit (not shown), for each document file (not shown) such as a Web page on the network.

Fig. 3 is an example of contents of the metadata. In the metadata, a set of information between the tags "<metadata>" and "</metadata>" denotes metadata for one document file. In the example shown in Fig. 3, metadata 1 to 4 that correspond to four document files are shown.

In each piece of the metadata, the section between the tags "<url>" and "</url>" specifies the storing location of the document file from which metadata is generated, and the section between the tags "<pageno>" and "</pageno>" specifies how many pages the document file has. The section between the tags "<title>" and "</title>" specifies the title of the document file from which the metadata is generated, and the section between the tags "<description>" and "</description>" specifies all or part of the content of the document file from which the metadata is generated. The section between the tags "<category>" and "</category>" specifies the category of the document file from which the metadata is generated, and the section between the tags "<product>" and "</product>" specifies the name of a product relevant to the document file (for example, the document file may be an introduction of a product).

A set of information between the tags "<print>" and "</print>" specifies a print setup for printing the document file from which the metadata 1 is generated, a set of information between the tags "<media>" and "</media>" specifies the paper size for printing the document file, a set of information between the tags "<sides>" and "</sides>" specifies how many aggregated pages are there on printing the document file, and a set of information between the tags "<color>" and "</color>" specifies a color setup on printing the document file.

For example, when the metadata processing unit 14 derives a search condition for searching for a document file that describes a product A as well as including a comment about the product based on the document information (property information) of the search source document file and the rule data 151 shown in Fig. 2, the metadata 3 and 4 that satisfy the search condition are obtained as the search results out of the metadata 1 to 4 shown in Fig. 3.

Thus, metadata of a document file relevant to the search source document file is searched for based on a search condition derived from the document information of the search source document file and the rule data that defines a predetermined condition regarding searching for metadata, with the result that metadata of a document file relevant to the search source document file can be obtained based on a more advanced search condition.

Referring back to Fig. 1, the information storage unit 15 includes a device such as a storage apparatus 4, which will be described later, and stores therein in advance the rule data 151.

The search result displaying unit 16 generates, based on the search result obtained by the metadata processing unit 14, a display screen that displays the search result as the relevant information of the search source document file, and displays on the displaying apparatus 5 the screen that is thus generated. When metadata is not obtained by a search operation performed by the metadata processing unit 14, a message informing that suitable metadata is not available is displayed on the display apparatus 5.

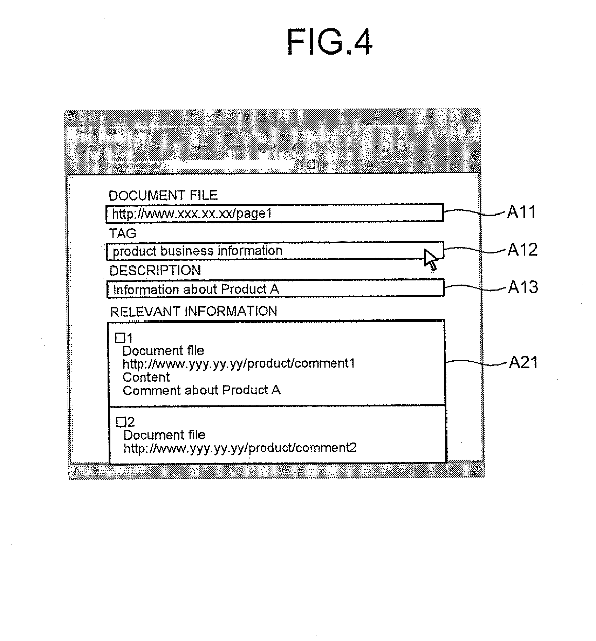

Fig. 4 is an example of a display screen displayed by the search result displaying unit 16. The document file received by the document receiving unit 12 and the storing location (URL) of the search source document file are displayed at the region A11 (document file) in the display screen. Tag information and a certain character string contained in the search source document file that contribute to searching for metadata, or tag information and a certain character string contained in the property information that is added via the property adding unit 13 are displayed at the regions A12 (tag) and A13 (information).

The search result that is obtained by the metadata processing unit 14 as the relevant information relevant to the search source document file of the region A11 is displayed at the region A21 (relevant information). More specifically, the storing location (URL) of the document file contained in the metadata obtained as the search result and the content of the document file are displayed. It is possible to configure such that by selecting the URL displayed at the region A21 via the input apparatus 6, the location specified by the URL is accessed.

Thus, both of a search source document file and the relevant information relevant thereto may be observed at the same time, with the result that convenience of a user can be improved.

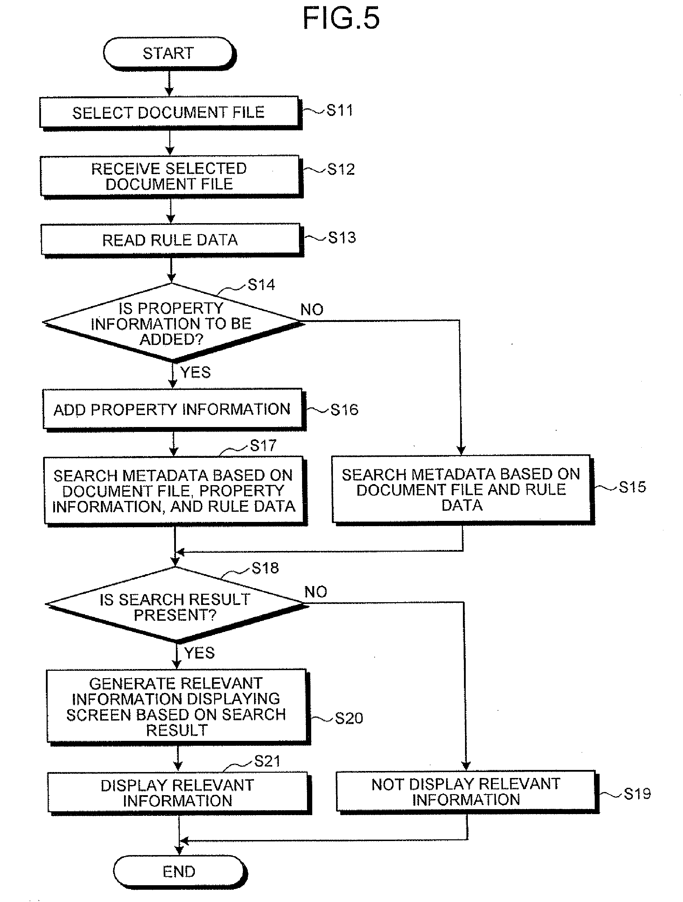

Referring to Fig. 5, operation performed by the document displaying apparatus 100 will be described below. Fig. 5 is a flowchart of a relevant information displaying process performed by the document displaying apparatus 100.

First, a document file, as an object of the process, is selected via the displaying apparatus 5 (step S11), and when the selected document file is received by the document receiving unit 12 (step S12), the metadata processing unit 14 reads the rule data 151 stored in the information storage unit 15 (step S13).

Then, the property adding unit 13 determines whether an instruction to add a property to the search source document file has been input via the input apparatus 6 (step S14). If such an instruction has not been input (No at step S14), the metadata processing unit 14 derives a search condition based on the document information of the search source document file received at the step S12 and the rule data 151 read at the step S13, and searches metadata stored in the metadata storage unit 201 of the metadata storage apparatus 200 for metadata that satisfies the search condition (step S15).

If such an instruction has been input (Yes at step S14), the property adding unit 13 adds to the document file the information that is input via the input apparatus 6 as the property information (step S16).

Then, the metadata processing unit 14 derives a search condition based on the document information of the search source document file received at the step S12, the property information added to the search source document file at the step S16, and the rule data 151 read at the step S13, and searches metadata stored in the metadata storage unit 201 of the metadata storage apparatus 200 for metadata that satisfies the search condition (step S17).

At the next step S18, the search result displaying unit 16 examines the search result obtained at the step S15 or S17 and when no search result is present (No at step S18), the relevant information is set to be not displayed as well as a message is displayed informing that any suitable relevant information is not available (step S19), and the present operation is terminated.

At the step S18, however, if a search result is present (Yes at step S18), the search result displaying unit 16 generates, based on the search result obtained at the step S15 or the step S17, a display screen for displaying the relevant information (step S20), and displays the generated display screen on the displaying apparatus 5 (step S21), then the present operation is terminated.

Thus, in the first embodiment, metadata of a document file relevant to the search source document file is searched for from an external device based on document information of a search source document file, and the search result thus obtained is displayed as relevant information of the search source document file. As a result, various types of information relevant to the search source document file can be efficiently obtained and displayed.

Although one piece of rule data 151 is shown in the information storage unit 15, there is no limitation on the number or the content of the rule data that can be stored in the information storage unit 15. For example, a plurality of pieces of rule data 151 can be stored in the information storage unit 15 in advance, and some or all out of the rule data 151 can be appropriately used based on information such as a user's instruction and the search source document file property.

The first embodiment is embodied such that the document displaying apparatus 100 performs search of metadata, however, the configuration is not limited thereto. It is possible to configure such that the metadata storage apparatus 200 receives a search query from the document displaying apparatus 100, searches the metadata storage unit 201, and transmits the search result to the document displaying apparatus 100.

Next, a document displaying apparatus according to a second embodiment of the present invention will be described. The components that are similar to those components of the first embodiment will be given like reference characters and descriptions thereabout will be omitted.

In the first embodiment, metadata that satisfies a search condition is searched for from metadata on the network N (metadata stored in the metadata storage unit 201). In the second embodiment, however, metadata that satisfies a search condition is searched for from metadata stored in a local device.

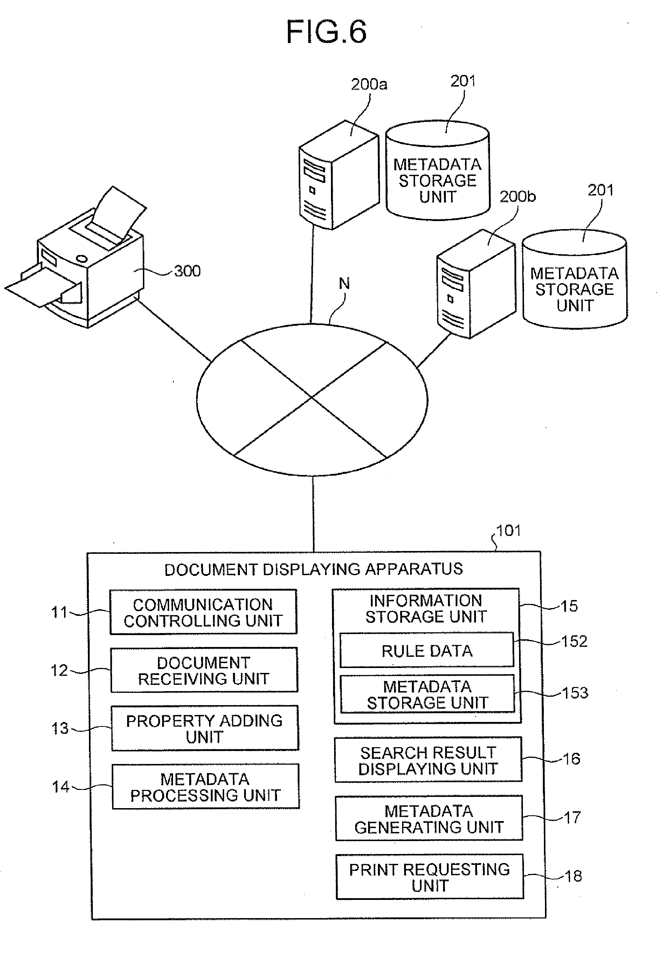

Fig. 6 is a schematic diagram for explaining a document displaying apparatus 101 according to the second embodiment. The document displaying apparatus 101 includes a metadata generating unit 17 and a print requesting unit 18, in addition to the functional units described in the first embodiment. The information storage unit 15 includes rule data 152, instead of rule data 151, and a metadata storage unit 153 that stores therein metadata generated by the metadata generating unit 17.

An image forming apparatus 300, in addition to the metadata storage apparatus 200, is connected to the network N. The image forming apparatus 300 is a device, such as a printer device and a multifunction product that can print a document file upon receiving a print request from the document displaying apparatus 101.

The metadata generating unit 17 is a functional unit that generates metadata, and generates one piece of metadata based on document information of the search source document file each time a document file is received by the document receiving unit 12, and stores metadata in the metadata storage unit 153 of the information storage unit 15.

More specifically, metadata generated by the metadata generating unit 17 contains information such as the storing location, the title, and the category of the document file, as shown in Fig. 3. When, for example, the document file is a structured document such as an XML document, these pieces of information are extracted from a tag structure contained in the document. When property information has been added, metadata which contains the content of the property information can be generated.

The metadata generating unit 17 adds a printing condition such as the paper size, the number of aggregated pages, and the printing colors, contained in the printing request, to the metadata corresponding to the document file, every time a print request to instruct to print the document file is transmitted to the image forming apparatus 300 by the print requesting unit 18.

The print requesting unit 18 transmits to the image forming apparatus 300 the print request to instruct to print the document file upon receiving an instruction signal input via the input apparatus 6. The print request contains a printing condition such as the paper size, the number of the aggregated pages, and the printing colors, as well as the document file as a printing object.

The rule data 152 includes a rule for instructing to search metadata stored in the metadata storage unit 153. The metadata processing unit 14 derives a search condition based on the search source document file (property information) and the rule data 152, and searches the metadata storage unit 153 for metadata that satisfies the search condition.

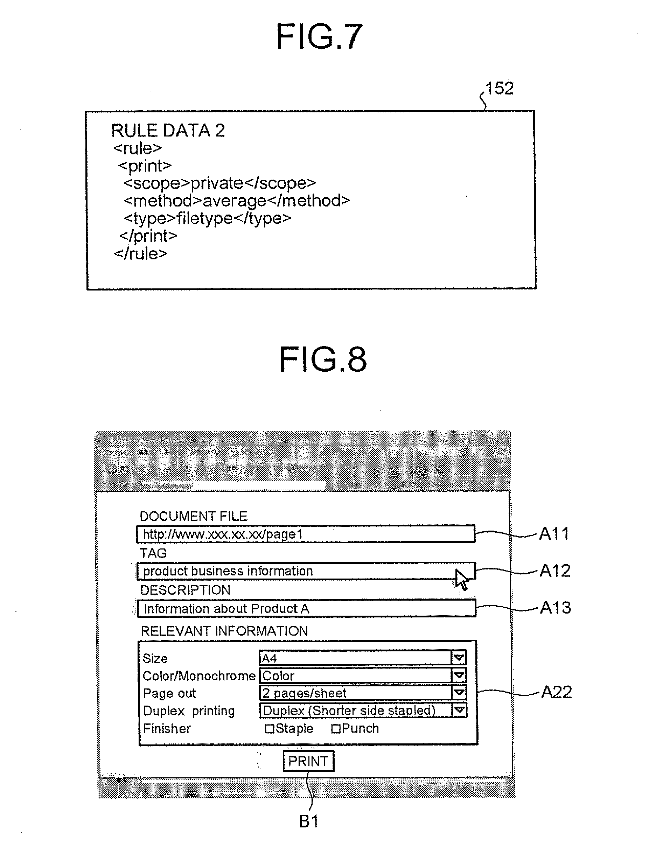

Fig. 7 is a diagram of an example of the rule data 152. In Fig. 7, the section between the tags "<print>" and "</print>" defines a rule regarding a printing condition, wherein a substantial rule regarding the printing condition is defined. Here, the section "<scope> private </scope>" instructs to search metadata stored in the local device, in other words in the metadata storage unit 153 included in the document displaying apparatus.

The section "<method> average </method>" specifies the average of frequency of use, and the section "<type> filetype </type>" specifies the file type of the document file received by the document receiving unit 12.

Thus, the rule data 152 includes a rule for deriving the printing condition used most frequently out of the printing conditions for printing a document file having the file type identical to that of the search source document file in the metadata stored in the local device (the document displaying apparatus 101). For example, when the metadata 1 to 4 shown in Fig. 3 are stored in the metadata storage unit 153, the metadata processing unit 14 reads one by one printing conditions having the file type identical to that of the search source document file, contained in the metadata 1, for example, and calculates the statistical feature of each printing condition, thereby deriving the printing condition used most frequently as a search result.

Fig. 8 is an example of a display screen displayed by the search result displaying unit 16. The regions A11 to A13 are similar to those shown in Fig. 4. In the region A22 (relevant information), the search result obtained by the metadata processing unit 14 is displayed as relevant information of the search source document file. The printing condition (the paper size, color/monochrome, and the like) used more frequently than other printing conditions for printing a document file having the file type identical to that of the search source document file is displayed as a search result by the metadata processing unit 14 based on the rule data 152.

Thus, the statistical feature of certain information contained in the metadata that satisfies a search condition can be displayed, with the result that various information relevant to the search source document file can be efficiently obtained and displayed.

Various printing conditions displayed in the region A22 are configured such that they can be modified optionally as desired via the input apparatus 6, and the search result displaying unit 16 modifies the printing conditions displayed therein according to user's instruction.

A print button B1 is for instructing to print the search source document file displayed in the region A11 under the condition displayed in the region A22. The print requesting unit 18 prints a search source document file, by obtaining from the storing location of the search source document file the search source document file displayed in the region A11, by generating a print request that contains instruction information for printing the search source document file under the condition displayed in the region A22, and by transmitting the request to the image forming apparatus 300, upon receiving a pressing signal as a result of operation of the print button 81.

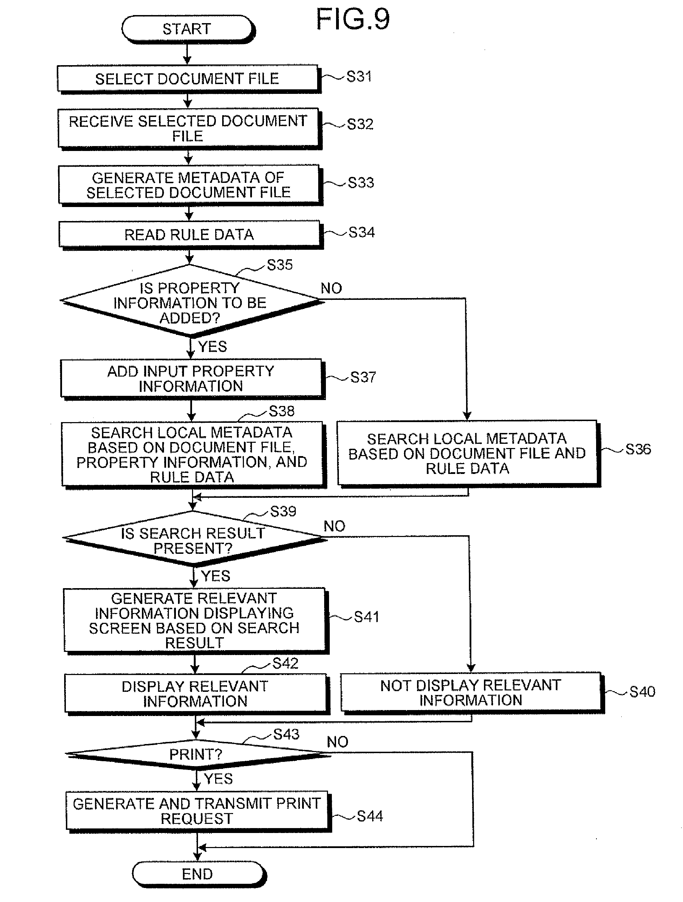

Referring to Fig. 9, operation performed by the document displaying apparatus 101 will be described below. Fig. 5 is a flowchart of a relevant information displaying operation performed by the document displaying apparatus 101.

First, a document file, as an object of the process, is selected via a device such as the displaying apparatus 5 (step S31). When the document file thus selected is received by the document receiving unit 12 (step S32), the metadata generating unit 17 generates metadata relevant to the search source document file, and stores it in the metadata storage unit 153 (step S33). Next, the metadata processing unit 14 reads the rule data 152 stored in the information storage unit 15 (step S34).

Then, the property adding unit 13 determines whether an instruction to add a property to the search source document file has been input via the input apparatus 6 (step S35). If such an instruction has not been input (No at step S35), the metadata processing unit 14 derives a search condition based on the document information of the search source document file received at the step S32 and the rule data 152 read at the step S34, and searches metadata stored in the metadata storage unit 153 for metadata that satisfies the search condition (step S36).

If such an instruction has been input (Yes at step S35), the property adding unit 13 adds to the document file the information that is input via the input apparatus 6 as the property information (step S37).

Then, the metadata processing unit 14 derives a search condition based on the document information of the search source document file received at the step S32, the property information added to the search source document file at the step S37, and the rule data 152 read at the step S34, and searches metadata stored in the metadata storage unit 153 for metadata that satisfies the search condition (step S38).

At the next step S39, the search result displaying unit 16 examines the search result obtained at the step S36 or S38 and when no search result is present (No at step S39), the relevant information is set to be not displayed as well as a message is displayed informing that any suitable relevant information is not available (step S40), and the system control is given to the step S43.

At the step S39, however, if a search result is present (Yes at step S39), the search result displaying unit 16 generates, based on the search result obtained at the step S36 or S38, a display screen for displaying relevant information (step S41), and displays the generated display screen on the displaying apparatus 5 (step S42), and the system control is given to the step S43.

At the next step S43, the print requesting unit 18 determines whether an instruction for printing a document file is input via the input apparatus 6 (step S43). If an instruction for printing has not been input (No at step S43), the present operation is terminated.

At the step S43, if an instruction for printing has been input, for example, by pressing down the print button B1 shown in Fig. 8 (Yes at step S43), the print requesting unit 18 generates a print request to instruct to print the search source document file received at the step S32 under a certain print request (see the region A22 in Fig. 8), transmits the print request to the image forming apparatus 300, and terminates the operation.

Thus, in the first embodiment, metadata of a document file relevant to the search source document file is searched for from within the document displaying apparatus 101, based on the document information of a search source document file, and the search result is displayed as relevant information of the search source document file. As a result, various information relevant to the search source document file can be efficiently obtained and displayed.

As explained above, in the second embodiment, metadata is stored in the metadata storage unit 153 of the document displaying apparatus 101. Alternatively, the metadata can be provided browsably to various devices on the network N, so that the document displaying apparatus 101 can function as the metadata storage apparatus 200.

Moreover, in the second embodiment, metadata in the local device is searched with an assumption that the number of the rule data 152 is one, however, the number and the classification of the rule data provided with the document displaying apparatus 101 in advance is not limited to one. For example, the present invention may be embodied such that the rule data 151 and 152 are stored in advance in the information storage unit 15, and both of the rule data are properly used accordingly with information such as user's instruction and the property of the search source document file.

Next, a document displaying apparatus according to a third embodiment of the present invention will be described. The components that are similar to those components of the first and the second embodiments will be given like reference characters and descriptions thereabout will be omitted.

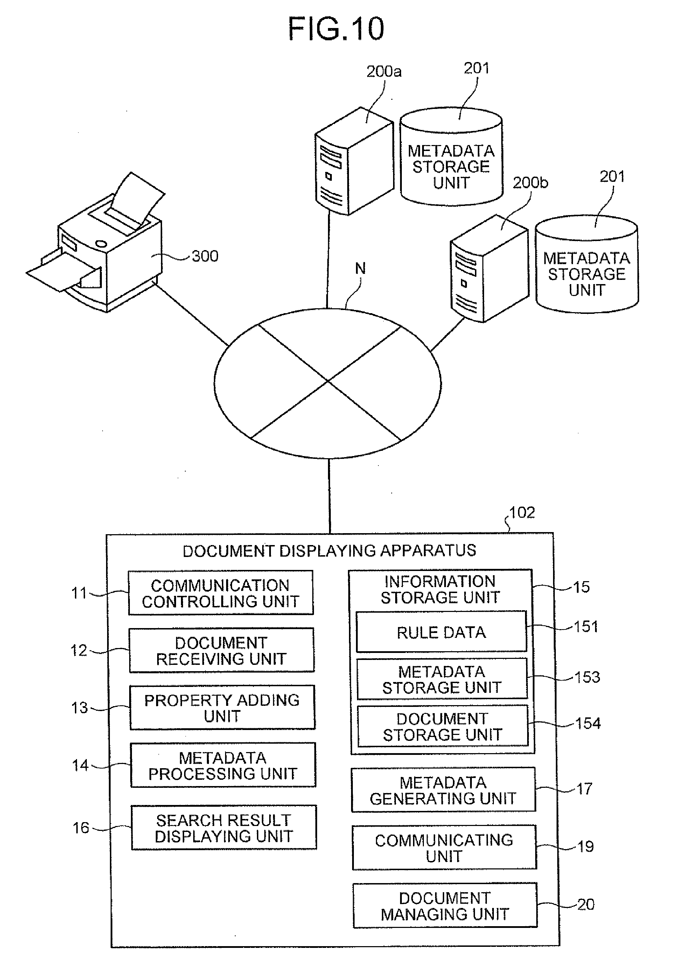

Fig. 10 is a schematic diagram for explaining a document displaying apparatus 102 according to the third embodiment. The document displaying apparatus 102 includes the metadata generating unit 17, a communicating unit 19, and a document managing unit 20, in addition to the functional units described in the first embodiment. The information storage unit 15 includes the metadata storage unit 153 and a document storage unit 154 that stores therein a document file, in addition to the rule data 151.

The communicating unit 19 performs a predetermined operation in response to an instruction input by a user via the input apparatus 6. Such an operation includes, for example, transmitting to another device document files specified in the display screen displayed by the search result displaying unit 16.

The predetermined operation can include generating a print request of a document file and transmitting the print request to a device such as the image forming apparatus 300. The predetermined operation can include transmitting a document file by fax to another device via a fax modem (not shown) and transmitting to another device a document file attached to, for example, email via the communication controlling unit 11. The operations performed by the communicating unit 19, however, are not limited to these.

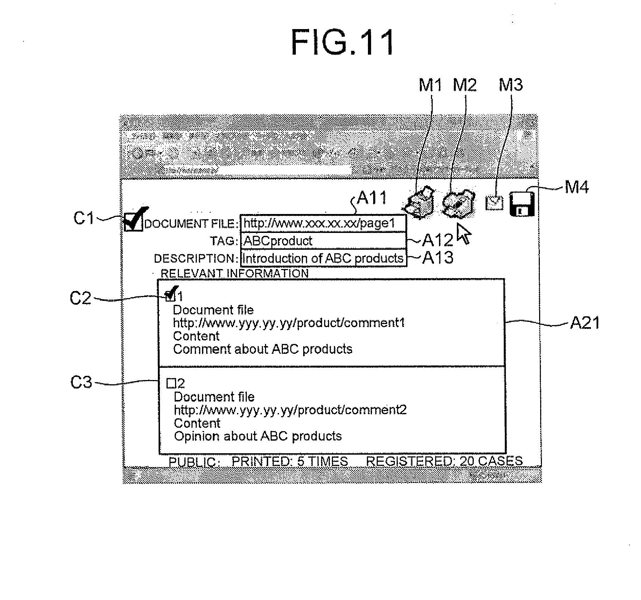

Input of an instruction signal to the communicating unit 19 may be configured such that, for example, input thereof is performed by selecting icon images M1 to M3 shown in Fig. 11 via the input apparatus 6. The display screen shown in Fig. 11 will be described below.

Fig. 11 is an example of a display screen displayed by the search result displaying unit 16. In Fig. 11, a user can select a document file as an object of the operation performed by the communicating unit 19 by specifying one from check boxes that are given reference characters C1 to C3 in Fig. 11. For example, in the example shown in Fig. 11, document data corresponding to the check boxes C1 and C2 are selected as an object of the operation.

The icon image M1 is for instructing to print a document file. Upon receiving an instruction signal that the icon image M1 is selected, the communicating unit 19 obtains those selected as objects of the operation out of the document files displayed in the regions A11 and A21, from the storing locations thereof, and generates each print request for each document file, and transmits them to the image forming apparatus 300. Information such as a printing condition is predetermined.

Thus, both of a search source document file and document files relevant thereto can be printed at the same time, with the result that a set of document files can be efficiently printed.

The icon image M2 is for instructing to transmit a document file by fax. Upon receiving an instruction signal that the icon image M2 is selected, the communicating unit 19 obtains those selected as objects of the operation out of the document files displayed in any one of the regions A11 and A21 or both, from the locations where they are stored, and transmits them to other devices via a fax modem (not shown). The destinations of other devices to which they are transmitted are input separately.

Thus, both of a search source document file and document files relevant thereto can be transmitted by fax at the same time, with the result that a set of the document files can be efficiently transmitted by fax.

The icon image M3 is for instructing to transmit a document file by email. Upon receiving an instruction signal that the icon image M3 is selected, the communicating unit 19 obtains those selected as objects of the operation out of the document files displayed in the regions A11 and A21, from the storing locations thereof, and generates email to which these document files are attached, and transmits the email to other devices. The destinations of other devices for which the email is destined are input separately.

Thus, both of a search source document file and document files relevant thereto can be transmitted by email at the same time, with the result that a set of the document files can be efficiently transmitted by email.

Referring back to Fig. 10, the document managing unit 20 stores in the document storage unit 154 document files specified in the display screen displayed by the search result displaying unit 16, in response to an instruction signal input by a user via the input apparatus 6.

Input of an instruction signal to the document managing unit 20 may be configured such that, for example, input thereof is performed by selecting the icon image M4 shown in Fig. 11 via the input apparatus 6. Here, the icon image M4 shown in Fig. 11 is for instructing to store a document file. Upon receiving an instruction signal that the icon image M4 is selected, the document managing unit 20 obtains those selected as objects of the storing operation out of the document files displayed in the regions A11 and A21, from the storing locations thereof, and stores in the document storage unit 154 these document files with the search source document file corresponding to the document file relevant thereto. It should be noted here that the present invention may be embodied such that the property information displayed in the regions A12 and A13 may also stored with the search source document file corresponding to the document file relevant thereto.

Thus, both of the search source document file and document files relevant thereto can be stored at the same time, with the result that a set of the document files can be efficiently stored.

The document managing unit 20 reads a set of the document files stored in the document storage unit 154 with the search source document file corresponding to the document files relevant thereto, and displays the display screen on the displaying apparatus 5. It should be noted here that the display screen displayed here is not particularly specified, however, preferably the display screen is similar to that shown in Fig. 11.

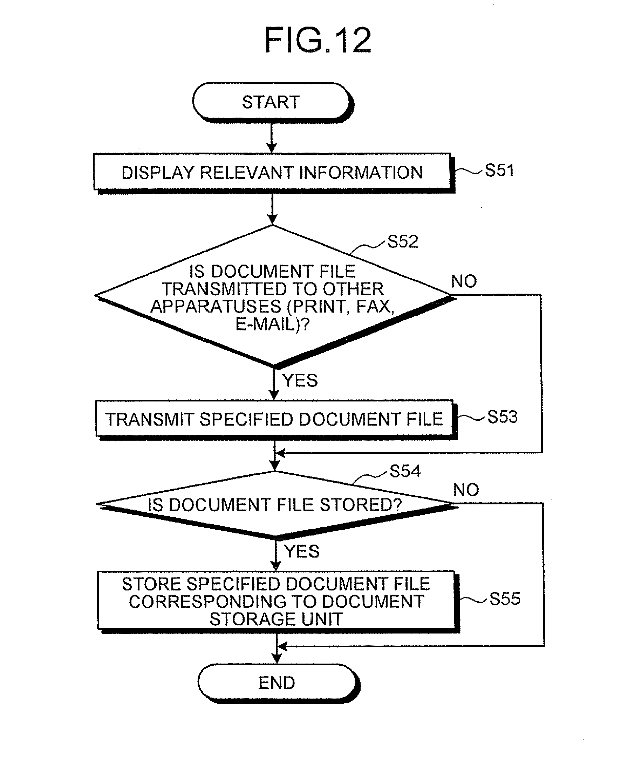

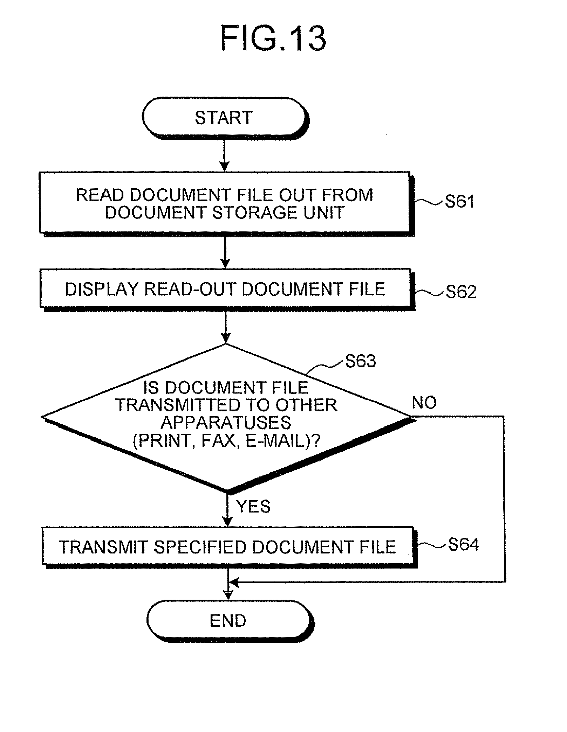

Referring to Figs. 12 and 13, operations performed by the document displaying apparatus 102 will be described below. Fig. 12 is a flowchart of a document file related operation performed by the document displaying apparatus 102. The document file related operation is performed after search is performed by the metadata processing unit 14.

First, the search result displaying unit 16 displays, based on the search result by the metadata processing unit 14, a display screen displaying relevant information such as shown in Fig. 11 on the displaying apparatus 5.

Next, the communicating unit 19 determines whether an instruction to instruct to transfer to other devices by a print request, fax, or email the document file displayed at the step S51 is input via the input apparatus 6 (step S52). When such an instruction has not been input (No at step S52), the system control is given to the next step S54.

At the step S52, when such an instruction has been input (Yes at step S52), document files selected as objects of the transferring operation are transferred to other devices by the method specified by a user via the input apparatus 6 (step S53), and the system control is given to the next step S54.

At the step S54, the document managing unit 20 determines whether an instruction is input via the input apparatus 6 to instruct to store the document files displayed at the step S51 (step S54). When such an instruction has not been input (No at step S54), the operation is terminated.

At the step S54, if such an instruction has been input (Yes at step S54), the document managing unit 20 stores in the metadata storage unit 153 the document files specified as objects of the storing operation with the search source document file corresponding to the document files relevant thereto (step S55), and the operation is terminated.

Fig. 13 is a flowchart of a document file reading operation performed by the document displaying apparatus 102. Prior to the present operation, a set of the document files are stored in advance in the document storage unit 154 by the document managing unit 20.

First, when an instruction signal to instruct to read a certain document file is input via the input apparatus 6, the document managing unit 20 reads from the document storage unit 154 the document file as well as document files that correspond to the document file (step S61).

Next, the document managing unit 20 displays the document files that are read at the step S61 on the displaying apparatus 5 (step S62).

Next, the communicating unit 19 determines whether an instruction to instruct to transfer, by a print request, fax, or email, to other devices all or any one of the document files displayed at the step S62 is input via the input apparatus 6 (step S63). If such an instruction has not been input (No at step S63), the operation is terminated.

At the step S63, if such an instruction has been input (Yes at step S63), the communicating unit 19 transfers to other devices in a specified method document files selected as object of the transferring operation by a user via the input apparatus 6 (step S64), and the operation is terminated.

Thus, both of a certain document file and document files relevant thereto can be read at the same time, with the result that a set of the document files can be efficiently read.

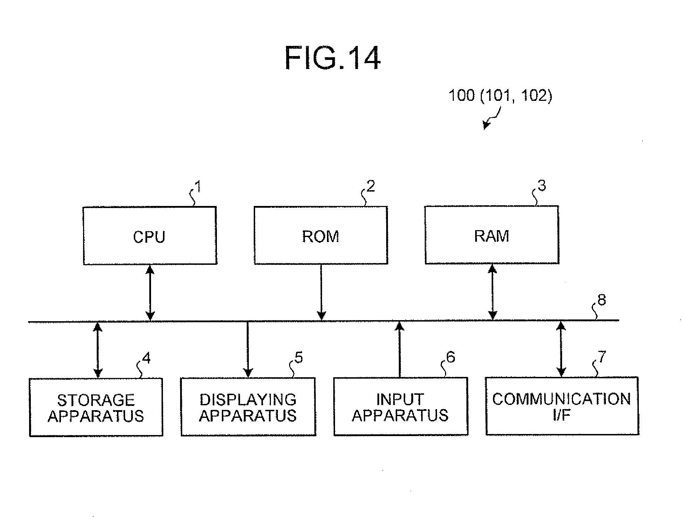

Fig. 14 is a block diagram of an exemplary hardware configuration of any one the document displaying apparatus 100 (101, or 102). The document displaying apparatus 100 includes a central processing unit (CPU) 1, a read only memory (ROM) 2, a random access memory (RAM) 3, the storage apparatus 4 such as a hard disk drive (HDD), the displaying apparatus 5 such as a display monitor, the input apparatus 6 such as a keyboard and a mouse, a communication I/F 7, and a bus 8 that connects each of the devices. Thus, the hardware configuration of the document displaying apparatus 100 is similar to an ordinary computer.

A computer program for various operations executed by the document displaying apparatus 100 has a module configuration including the units that are described above (the communication controlling unit 11, the document receiving unit 12, the property adding unit 13, the metadata processing unit 14, the search result displaying unit 16, the metadata generating unit 17, the print requesting unit 18, the communicating unit 19, and the document managing unit 20), and as actual hardware, the CPU 1 reads predetermined programs from the ROM 2 or the storage apparatus 4 and executes them, thereby the various units are loaded into the main storage device (the RAM 3) and the various units are generated on the main storage device.

A computer program executed by the document displaying apparatus 100 is provided on a computer readable recording medium such as a CD-ROM, a flexible disk (FD), a CD-R, and a digital versatile disk (DVD) in a file with an installable or executable format.

The present invention may be embodied such that a computer program executed by the document displaying apparatus 100 is stored in a computer connected to a network such as the Internet, and the program is provided by downloading it via the network. The present invention may also be embodied such that a computer program executed by the document displaying apparatus 100 is provided or distributed via a network such as the Internet.

A computer program of the present invention may also be confirmed such that the computer program is provided by being incorporated into a medium such as a ROM.

The present invention is not limited to the embodiments as they are, and may be embodied by modifying the components without deviating from the spirit of the invention. Various inventions may be implemented by suitably combining a plurality of components disclosed in connection with the foregoing embodiments. For example, some of the components shown in the embodiments may be omitted. Further, some of the components according to various embodiments may be suitably combined.

According to an aspect of the present invention, metadata of a relevant document file is obtained from an external device based on a piece of document information of a document file and the obtained metadata is displayed. As a result, various information relevant to the selected document file can be efficiently obtained and displayed.

Metadata of the relevant document file of the document file can be obtained from the local device based on the document information of the document file and the obtained metadata is displayed. As a result, various information relevant to the selected document file can be efficiently obtained and displayed.

Metadata of a relevant document file can be obtained based on document information of a document file and rule data that defines a predetermined condition for searching the metadata. As a result, the metadata of the relevant document file can be obtained based on a more advanced condition.

Property information is added to a document file thereby expanding a property originally owned by the document file. Because of the expansion of the property, metadata of the relevant document file can be obtained more accurately.

A statistical feature of the obtained metadata is derived and displayed. As a result, various statistical features relevant to the selected document file can be displayed.

A document file and a relevant document file can be observed together at the same time, with the result that convenience of a user can be improved.

A relevant document file is obtained that corresponds to metadata, with the result that a relevant document file of the selected document file can be efficiently obtained.

A document file and a relevant document file is transmitted to an external device together at the same time, with the result that a set of the document files can be efficiently transmitted.

A document file and a relevant document file is stored at the same time, with the result that a set of the document files can be efficiently stored.

A document file and a relevant document file are read and displayed together at the same time, with the result that a set of the document files can be efficiently managed.

Metadata of a document file can be generated and stored in a local device.

According to another aspect of the present invention, by having a computer to read and execute a certain computer program, a document displaying method is implemented by using a computer, and a similar effect is achieved as the document displaying method.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A document displaying apparatus comprising:
a receiving unit (12) that receives specification of a document file;
a metadata processing unit (14) that obtains from an external device metadata of a relevant document file that is a file relevant to the document file based on document information of the document file; and
a display controlling unit (16) that displays the metadata on a displaying unit.

2. The document displaying apparatus according to claim 1, further comprising a metadata storage unit (153) that stores therein metadata,
wherein the metadata processing unit (14) obtains metadata of the relevant document file from metadata stored in the metadata storage unit (153).

3. The document displaying apparatus according to claim 1 or 2, further comprising a rule data storage unit (15) that stores therein rule data that defines a condition for searching metadata,
wherein the metadata processing unit (14) obtains metadata of the relevant document file based on the document information and the rule data.

4. The document displaying apparatus according to any one of claims 1 to 3, further comprising a property adding unit (13) that adds property information to the document file,
wherein the metadata processing unit (14) obtains metadata of the relevant document file based on the document information and the property information in the document file.

5. The document displaying apparatus according to any one of claims 1 to 4, wherein
the metadata processing unit (14) derives a statistical feature of the metadata, and
the display controlling unit (16) displays the statistical feature on the displaying unit.

6. The document displaying apparatus according to claim 1 or 5, wherein the display controlling unit (16) displays the document file along with the metadata.

7. The document displaying apparatus according to any one of claims 1 to 4, wherein the metadata includes storing location information, and
the document displaying apparatus further comprising a relevant document file obtaining unit that obtains the relevant document file based on storing location information in the metadata.

8. The document displaying apparatus according to claim 7, further comprising a transmission unit (19) that transmits to an external device the document file and the relevant document file obtained by the relevant document file obtaining unit.

9. The document displaying apparatus according to claim 7, further comprising:
a document storage unit (154); and
a document managing unit (20) that stores in the document storage unit (154) the document file and the relevant document file in a related manner.

10. The document displaying apparatus according to claim 9, wherein
the document managing unit (20) reads a document files stored in the document storage unit (154) in a related manner with the document file, and
the display controlling unit (16) displays read document file on the displaying unit.

11. The document displaying apparatus according to claim 2, further comprising:
a metadata generating unit (17) that generates metadata of a document file based on document information of the document file; and
a metadata managing unit that stores the metadata generated by the metadata generating unit (17) in the metadata storage unit (153).

12. A document displaying method comprising:
obtaining from an external device metadata of a relevant document file that is a file relevant to the document file based on document information of a specified document file; and
displaying the metadata on a displaying unit.

13. The document displaying method according to claim 12, further comprising storing metadata is a metadata storage unit (153),
wherein the obtaining includes obtaining metadata of the relevant document file from metadata stored in the metadata storage unit (153).

14. The document displaying method according to claim 12 or 13, wherein the obtaining includes obtaining metadata of the relevant document file based on the document information and rule data that defines a condition for searching for the metadata.

15. The document displaying method according to any one of claims 12 to 14, further comprising adding property information to the document file,
the obtaining includes obtaining metadata of the relevant document file based on the document information and the property information in the document file.

16. The document displaying method according to any one of claims 12 to 15, wherein
the obtaining includes deriving a statistical feature of the metadata, and
the displaying includes displaying the statistical feature on the displaying unit.

17. The document displaying method according to claim 12 or 16, wherein the displaying includes displaying the document file along with the metadata.

18. The document displaying method according to any one of claims 12 to 15, wherein the metadata includes storing location information, and
the document displaying method further comprising obtaining the relevant document file based on storing location information in the metadata.

19. The document displaying method according to claim 18, further comprising transmitting to an external device the document file and the relevant document file obtained at the obtaining.

20. The document displaying method according to claim 18, further comprising storing in the document file and the relevant document file in a related manner in a document storage unit (154).

21. The document displaying method according to claim 20, further comprising reading a document files stored in the document storage unit (154) in a related manner with the document file, and
the displaying includes displaying the document file read at the reading on the displaying unit.

22. The document displaying method according to claim 13, further comprising:
generating metadata of a document file based on document information of the document file; and
storing the metadata generated at the generating in the metadata storage unit (153).

23. A computer program product comprising a computer usable medium having computer readable program codes embodied in the medium that, when executed, causes a computer to execute:
obtaining from an external device metadata of a relevant document file that is a file relevant to the document file based on document information of a specified document file; and
displaying the metadata on a displaying unit.
